# EUROPÄISCHE PATENTSCHRIFT

(11) **EP 1 970 273 B1**
(45) Veröffentlichungstag und Bekanntmachung des Hinweises auf die Patenterteilung: **15.08.2012**
(21) Anmeldenummer: 08450006.5
(22) Anmeldetag: 24.01.2008
(51) Int. Cl.: B60T 17/06, B60T 11/26, F17C 13/08

(54) **Befestigungssystem für Fahrzeugbehälter**
Attachment system for automobile containers
Système de fixation pour réservoir de véhicule

(30) Priorität: 13.03.2007 AT 15507 U
(43) Veröffentlichungstag der Anmeldung: 17.09.2008
(73) Patentinhaber: Alutech Gesellschaft m.b.H., 5651 Lend (AT)
(72) Erfinder: Busskamp, Daniel, 5722 Niedersill (AT); Panzierer, Adolf, 9971 Matrei in Osttirol (AT)
(74) Vertreter: Weiser, Andreas

(56) Entgegenhaltungen:
- EP-A1- 1 679 468
- US-A- 2 725 208
- US-A- 4 345 789
- US-A- 6 029 989
- US-A1- 2006 196 545

## Beschreibung

Die vorliegende Erfindung betrifft ein Befestigungssystem für Fahrzeugbehälter, insbesondere zylinderförmige Druckluftbehälter von Nutzfahrzeugen.

US 6 029 989 zeigt ein konventionelles Druckluftbehälter befestigungssystem.

Derzeit werden Fahrzeugbehälter, wie Druckluftbehälter, in entsprechenden Aufnahmen des Fahrzeugs verankert, z.B. in Haltereifen, mittels Spannriemen am Fahrzeug verzurrt oder über entsprechende Adapter am Fahrzeug angeschraubt. Derartige Befestigungssysteme sind entweder aufwendig oder ermöglichen nur geringe Variabilität und damit wenige Anpassungsmöglichkeiten an unterschiedliche Behältergrößen und Einbaubedingungen.

Die Erfindung setzt sich zum Ziel, ein Befestigungssystem für Fahrzeugbehälter zu schaffen, welches die genannten Nachteile überwindet. Dieses Ziel wird mit einem Befestigungssystem der einleitend genannten Art erreicht, das sich gemäß der Erfindung auszeichnet durch zumindest eine Profilschiene, die sich an der Außenseite des Druckbehälters in dessen Längs- oder Querrichtung erstreckt und fest mit diesem verbunden ist, wobei in der Profilschiene zumindest ein fest am Fahrzeug verankerbares Verbindungselement in Profillängsrichtung festlegbar gleitverschieblich geführt ist.

Dadurch kann der Behälter auf einfache und dennoch stabile Art und Weise während seiner Montage am Fahrzeug in Längs- und/oder Querrichtung verschoben bzw. justiert werden, so daß eine Anpassung an die jeweilige Einbausituation und die jeweilige Behältergröße durchgeführt werden kann.

Der Querschnitt der Profilschiene kann von jeder in der Technik bekannten für diesen Zweck geeigneten Art sein. Bevorzugt ist die Profilschiene ein Hohlprofil, das auf der behälterabgewandten Seite mit einem Längsschlitz versehen ist, was auf einfache Weise durch Abkanten eines Profilblechs oder durch Strangpressen erzeugt werden kann.

Bevorzugt umfaßt das Verbindungselement eine den Längsschlitz durchsetzende, mit ihrem Kopf im Hohlprofil gehaltene Schraube zur Verankerung am Fahrzeug. Alternativ umfaßt das Verbindungselement bevorzugt eine im Hohlprofil gehaltene Mutter und eine den Längsschlitz durchsetzend in die Mutter eingreifende Schraube zur Verankerung am Fahrzeug. Beide Varianten ergeben eine einfache, kostengünstige und sichere Art der Festlegung der Gleitschiebeverbindung.

Besonders günstig ist es, wenn gemäß einem weiteren bevorzugten Merkmal der Erfindung das bzw. die Verbindungselement(e) bzw. deren Schraube(n) über einen bevorzugt U-profilförmigen Adapter am Fahrzeug verankerbar sind. Der Adapter ermöglicht die Einhaltung eines gegebenen Abstandes zwischen Behälter und Fahrzeug und kann überdies das Anziehen der genannten Schrauben erleichtern.

Die Profilschiene kann auf jede in der Technik bekannte Art mit dem Druckbehälter verbunden werden, beispielsweise durch Verschrauben, Verkleben, Durchsetzfügen (Toxen) usw. Bevorzugt wird vorgesehen, daß die Profilschiene mit dem Druckbehälter verschweißt ist, so daß die Profilschiene bereits bei der Schweißfertigung des Druckbehälters mitangebracht werden kann.

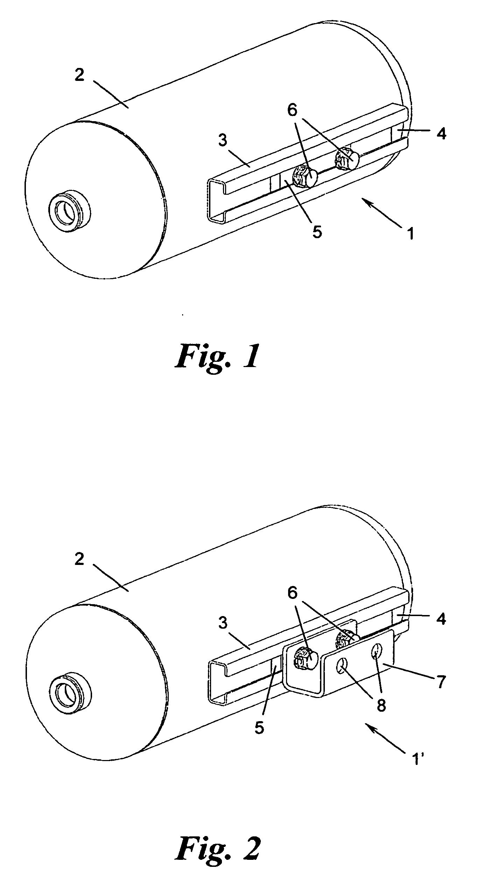

Die Erfindung wird nachstehend anhand von in den beigeschlossenen Zeichnungen dargestellten Ausführungsbeispielen näher erörtert. In den Zeichnungen zeigen die Fig. 1 und 2 das Befestigungssystem der Erfindung in Verbindung mit einem Druckluftbehälter in der Perspektivansicht, und zwar einmal ohne Adapter (Fig. 1) und einmal mit Adapter (Fig. 2).

Das in Fig. 1 gezeigte Befestigungssystem 1 für einen Behälter 2 eines (nicht dargestellten) Nutzfahrzeuges umfaßt eine Profilschiene 3, die an der Außenseite des Behälters 2 in dessen Längsrichtung erstreckend angeschweißt ist. Der Behälter 2 kann sowohl nicht-druckbeaufschlagte Medien als auch druckbeaufschlagte Medien, wie Gase und Flüssigkeiten, enthalten. In den gezeigten Beispiel ist der Behälter 2 ein langgestreckter, etwa zylinderförmiger Druckluftbehälter.

Die Profilschiene 3 kann anstelle durch Verschweißen auch durch Verschrauben, Vernieten, Verkleben, Durchsetzfügen (Toxen) usw. mit dem Druckbehälter 2 verbunden werden. Es ist auch möglich, daß sich die Profilschiene 3 in Querrichtung des Behälters 3 erstreckt, bzw. daß zwei oder mehrere Profilschienen 3 vorgesehen werden, die in Längs- und/oder Querrichtungen des Behälters 2 verlaufen. So kann der Behälter 2 unter Verwendung einer einzelnen oder gleichzeitiger Verwendung mehrerer dieser Profilschienen in Längs- und/oder Querrichtung einstellbar montiert werden.

Die bzw. jede Profilschiene 3 kann ein gekantetes Profil sein, ein Strangpreßprofil, ein gefrästes Profil usw. Im gezeigten Beispiel ist sie ein C-förmig abgekantetes Profilblech, d.h. ein Hohlprofil mit einem behälterabgewandten Längsschlitz 4.

In der Profilschiene 3 ist ein Verbindungselement 5 in Profillängsrichtung gleitverschieblich und festlegbar geführt. Das Verbindungselement 5 ist im gezeigten Beispiel ein in der Art einer Legmutter ausgebildeter Gleitblock mit Gewindebohrungen, in welche Schrauben 6 den Längsschlitz 4 durchsetzend eingreifen. Die Schrauben 6 dienen zur Verankerung am (nicht gezeigten) Fahrzeug, beispielsweise indem sie entsprechende Bohrungen des Fahrzeugrahmens durchsetzen. Dadurch kann der Druckbehälter 2 vor dem Festziehen der Schrauben 6 in Längsrichtung verschoben und justiert und durch Anziehen der Schrauben 6 in der jeweiligen Stellung festgelegt und befestigt werden.

Fig. 2 zeigt eine zweite Ausführungsform des Befestigungssystems 1', wobei gleiche Bezugszeichen gleiche Teile wie in Fig. 1 bezeichnen. Die Schrauben 6 sind hier an einem U-profilförmigen Adapter 7 verankert, welcher seinerseits über Bohrungen 8 und entsprechende weitere Schrauben (nicht gezeigt) am Fahrzeug verankerbar ist.

In einer weiteren alternativen Ausführungsform kann das Verbindungselement 5 direkt durch den Kopf einer oder mehrerer Schrauben gebildet sein, welche den Längsschlitz 4 in umgekehrter Richtung durchsetzen, so daß die Schraubenköpfe in der Profilschiene 3 gleiten und mit entsprechenden Muttern am Fahrzeugrahmen festgezogen werden.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Befestigungssystem für Fahrzeugbehälter, insbesondere zylinderförmige Druckluftbehälter von Nutzfahrzeugen, **gekennzeichnet durch** zumindest eine Profilschiene (3), die sich an der Außenseite des Druckbehälters (2) in dessen Längs- oder Querrichtung erstreckt und fest mit diesem verbunden ist, wobei in der Profilschiene (3) zumindest ein fest am Fahrzeug verankerbares Verbindungselement (5, 6) in Profillängsrichtung festlegbar gleitverschieblich geführt ist.

2. Befestigungssystem nach Anspruch 1, **dadurch gekennzeichnet, daß** die Profilschiene (3) ein Hohlprofil ist, das auf der behälterabgewandten Seite mit einem Längsschlitz (4) versehen ist.

3. Befestigungssystem nach Anspruch 2, **dadurch gekennzeichnet, daß** das Verbindungselement (6) eine den Längsschlitz (4) durchsetzende, mit ihrem Kopf im Hohlprofil gehaltene Schraube zur Verankerung am Fahrzeug umfaßt.

4. Befestigungssystem nach Anspruch 2, **dadurch gekennzeichnet, daß** das Verbindungselement (5, 6) eine im Hohlprofil gehaltene Mutter (5) und eine den Längsschlitz (4) durchsetzend in die Mutter eingreifende Schraube (6) zur Verankerung am Fahrzeug umfaßt.

5. Befestigungssystem nach einem der Ansprüche 1 bis 4, **dadurch gekennzeichnet, daß** das bzw. die Verbindungselement(e) (5, 6) bzw. deren Schraube(n) (6) über einen bevorzugt U-profilförmigen Adapter (7) am Fahrzeug verankerbar sind.

6. Befestigungssystem nach einem der Ansprüche 1 bis 5, **dadurch gekennzeichnet, daß** die Profilschiene (3) mit dem Druckbehälter (2) verschweißt ist.

## Claims

1. Fastening system for vehicle containers, in particular cylindrical compressed air containers for utility vehicles, **characterized by** at least one profiled rail (3) extending on the outside of the pressure container (2) in the longitudinal or transverse direction thereof and fixedly connected thereto, wherein at least one connection element (5, 6) that can be fixedly anchored to the vehicle is guided in a slidingly movable manner in the longitudinal direction of the profiled rail (3) such that it can be immobilized.

2. Fastening system according to Claim 1, **characterized in that** the profiled rail (3) is a hollow profile provided with a longitudinal slot (4) on the side facing away from the container.

3. Fastening system according to Claim 2, **characterized in that** the connecting element (6) comprises a bolt passing through the longitudinal slot (4) and held by its head in the hollow profile for anchoring on the vehicle.

4. Fastening system according to Claim 2, **characterized in that** the connecting element (5, 6) comprises a nut (5) held in the hollow profile and a bolt (6) passing through the longitudinal slot (4) and engaging in the nut for anchoring on the vehicle.

5. Fastening system according to one of Claims 1-4, **characterized in that** the connection element(s) (5, 6) or its/their bolt(s) (6) can be anchored on the vehicle via a preferably U-profile-shaped adapter (7).

6. Device according to one of Claims 1-5, **characterized in that** the profiled rail (3) is welded to the pressure container (2).

## Revendications

1. Système de fixation pour réservoir de véhicule, en particulier réservoir à air comprimé de forme cylindrique de véhicule utilitaire, **caractérisé par** au moins un rail profilé (3) qui s'étend sur le côté extérieur du réservoir sous pression (2) dans sa direction longitudinale ou transversale et qui est fermement relié à celui-ci, dans lequel au moins un élément de liaison (5, 6) susceptible d'être ancré fermement sur le véhicule est guidé dans le rail profilé (3) en coulissement dans la direction longitudinale du profilé et susceptible d'être immobilisé.

2. Système de fixation selon la revendication 1, **caractérisé en ce que** le rail profilé (3) est un profilé creux qui est doté d'une fente longitudinale (4) sur le côté détourné du réservoir.

3. Système de fixation selon la revendication 2, **caractérisé en ce que** l'élément de liaison (6) comprend une vis qui traverse la fente longitudinale (4) et qui est retenue par sa tête dans le profilé creux, pour l'ancrage sur le véhicule.

4. Système de fixation selon la revendication 2, **caractérisé en ce que** l'élément de liaison (5, 6) comprend un écrou (5) retenu dans le profilé creux et une vis (6) qui traverse la fente longitudinale (4) et qui s'engage dans l'écrou, pour l'ancrage sur le véhicule.

5. Système de fixation selon l'une des revendications 1 à 4, **caractérisé en ce que** le ou les élément(s) de liaison (5, 6) ou sa/leurs vis (6) est/sont susceptible(s) d'être ancrée(s) sur le véhicule via un adaptateur (7) ayant de préférence la forme d'un profilé en U.

6. Système de fixation selon l'une des revendications 1 à 5, **caractérisé en ce que** le rail profilé (3) est soudé avec le réservoir sous pression (2).
